# EUROPEAN PATENT APPLICATION

(11) **EP 2 527 393 A1**
(43) Date of publication of application: **28.11.2012**
(21) Application number: 11734555.3
(22) Date of filing: 11.01.2011
(51) Int. Cl.: C08J 5/18, C08K 3/20, C08L 27/16, H01B 3/00, H01G 4/18, H01G 4/20

(54) **HIGH-DIELECTRIC FILM**

(30) Priority: 20.01.2010 JP 2010010335
(71) Applicant: Daikin Industries, Ltd., Osaka 530-8323 (JP)
(72) Inventor: TATEMICHI, Mayuko, Osaka-Shi, Osaka 530-8323 (JP); TAKANO, Nanako, Osaka-Shi Osaka 530-8323 (JP); OTA, Miharu, Osaka-Shi Osaka 530-8323 (JP); YOKOTANI, Kouji, Osaka-Shi Osaka 530-8323 (JP); KOMATSU, Nobuyuki, Osaka-Shi Osaka 530-8323 (JP); MUKAI, Eri, Osaka-Shi Osaka 530-8323 (JP); KOH, Meiten, Osaka-Shi Osaka 530-8323 (JP)
(74) Representative: HOFFMANN EITLE
(86) International application number: PCT/JP2011/050259
(87) International publication number: WO 2011/089948

(57) **Abstract**

The present invention provides a high dielectric film comprising: a film-forming resin (A); and inorganic particles (B), wherein the film-forming resin (A) contains a vinylidene fluoride resin (a1), an amount of the inorganic particles (B) is not less than 0.01 parts by mass and less than 10 parts by mass for each 100 parts by mass of the film-forming resin (A), and the inorganic oxide particles (B) is at least one selected from the group consisting of: (B1) inorganic oxide particles of a metallic element of Group 2, 3, 4, 12, or 13 of the Periodic Table, or inorganic oxide composite particles of these; (B2) inorganic composite oxide particles represented by formula (1) :

M¹ₐ₁N_{b1}O_{c1}

wherein M¹ represents a metallic element of Group 2, N represents a metallic element of Group 4, a1 represents 0.9 to 1.1, b1 represents 0.9 to 1.1, c1 represents 2.8 to 3.2, and the numbers of M¹ and N each may be more than 1; and (B3) inorganic oxide composite particles of an oxide of a metallic element of Group 2, 3, 4, 12, or 13 of the Periodic Table and silicon oxide. The film has improved volume resistivity while maintaining a high dielectric constant owing to a VdF resin.

## Description

### TECHNICAL FIELD

The present invention relates to a high dielectric film that has an improved volume resistivity and is suitably used for a film capacitor.

### BACKGROUND ART

There has been conventionally proposed use of a vinylidene fluoride (VdF) resin (homopolymer or copolymer) as a film-forming resin because of its high dielectric constant (Patent Documents 1 and 2). There has been also known use of various high dielectric composite oxide particles with an aim of achieving higher dielectricity (Patent Documents 3 to 6).

Moreover, there has been also known use of a small amount (0.01 to 10 parts by mass for each 100 parts by mass of a VdF resin) of silica as a processing aid together with the high dielectric composite oxide particles (Patent Document 7).

Patent Document 1: JP S-60-199046 A
Patent Document 2: WO 2008/090947 A
Patent Document 3: WO 2007/088924 A
Patent Document 4: WO 2009/017109 A
Patent Document 5: JP 2009-38088 A
Patent Document 6: JP 2009-38089 A
Patent Document 7: WO 2008/050971 A

### SUMMARY OF THE INVENTION

### PROBLEMS TO BE SOLVED BY THE INVENTION

To improve the dielectricity of a film for a film capacitor, a large amount of high dielectric composite oxide particles is problematically required. Then, the electrical insulation properties of a VdF resin, which is originally not higher than that of another fluorine-free resin, is lowered. As a method for improving the withstand voltage of an obtainable film capacitor formed of a VdF resin, use of a highly-insulative fluorine-free resin such as cellulose acetate is effective. Here, the present inventors have found out that use of a small amount of specific inorganic oxide particles, among various multipurpose inorganic oxide particles, does not significantly lower the electrical insulation properties of a VdF resin film, and an obtainable film capacitor is allowed to have improved volume resistivity while maintaining a high dielectric constant of the VdF resin.

The present invention is aimed to provide a high dielectric film having improved volume resistivity while maintaining a high dielectric constant of a VdF resin.

### MEANS TO SOLVE THE PROBLEM

The present invention relates to a high dielectric film comprising: a film-forming resin (A); and inorganic oxide particles (B), wherein the film-forming resin (A) contains a vinylidene fluoride resin (a1), an amount of the inorganic oxide particles (B) is not less than 0.01 parts by mass and less than 10 parts by mass for each 100 parts by mass of the film-forming resin (A), and the inorganic oxide particles (B) is at least one selected from the group consisting of: (B1) inorganic oxide particles of a metallic element of Group 2, 3, 4, 12, or 13 of the Periodic Table, or inorganic oxide composite particles of these; (B2) inorganic composite oxide particles represented by formula (1):

M¹ₐ₁N_{b1}O_{c1}

wherein M¹ represents a metallic element of Group 2, N represents a metallic element of Group 4, a1 represents 0.9 to 1.1, b1 represents 0.9 to 1.1, c1 represents 2.8 to 3.2, and the numbers of M¹ and N each may be more than 1; and (B3) inorganic oxide composite particles of an oxide of a metallic element of Group 2, 3, 4, 12, or 13 of the Periodic Table and silicon oxide.

The inorganic oxide particles (B) preferably have a primary average particle size of not more than 1 µm.

The amount of the inorganic oxide particles (B) may be smaller, such as 0.1 to 5 parts by mass for each 100 parts by mass of the film-forming resin (A), to achieve a sufficient effect of improving the volume resistivity.

In the high dielectric film of the present invention, the film-forming resin (A) may further contain a fluorine-free resin (a2) in addition to the VdF resin (a1).

The high dielectric film of the present invention is particularly useful as a film for a film capacitor. Accordingly, the present invention also relates to a film capacitor in which an electrode layer is stacked on at least one side of the high dielectric film of the present invention.

### EFFECT OF THE INVENTION

According to the high dielectric film of the present invention, the volume resistivity can be significantly increased while a high dielectric constant of a VdF resin is maintained.

### MODES FOR CARRYING OUT THE INVENTION

The high dielectric film of the present invention is a film comprising a film-forming resin (A) and specific inorganic oxide particles (B), wherein the film-forming resin (A) contains a vinylidene fluoride (VdF) resin (a1), and the amount of the inorganic oxide particles (B) is not less than 0. 01 parts by mass and less than 10 parts by mass for each 100 parts by mass of the film-forming resin (A).

Each component is described in the following.

### (A) Film-forming resin

The film forming resin (A) contains a VdF resin (a1).

### (a1) VdF resin

The VdF resin preferably has a dielectric constant (1kHz, 25°C) of not less than 4 because when such a VdF resin is filmed, withstand voltage, electrical insulation properties, and dielectricity are improved.

The VdF resin (a1) may be a homopolymer (PVdF) of vinylidene fluoride (VdF) or a copolymer of VdF and one or two or more other monomers copolymerizable with VdF. Moreover, as the VdF resin (a1), a VdF homopolymer and a VdF copolymer may be blended together, or alternatively, two or more VdF copolymers may be blended together.

Examples of other monomers copolymerizable with VdF include: fluoroolefins such as tetrafluoroethylene (TFE), chlorotrifluoroethylene (CTFE), trifluoroethylene (TrFE), monofluoroethylene, hexafluoropropylene (HFP), and perfluoro(alkylvinylether) (PAVE); fluoroacrylates and functional group-containing fluoromonomers. In particular, TFE, CTFE, HFP are preferable as they have favorable solvent solubility. The proportion of VdF in the copolymerization is not less than 50 mol%, and preferably not less than 60 mol%, as such proportion allows a high dielectric constant and high solvent solubility.

In particular, a polymer containing 60 to 100 mol% of the VdF unit, 0 to 40 mol% of the TFE unit, and 0 to 40 mol% of the HFP unit is preferable because such a polymer has a dielectric constant of not less than 6.

Specific examples include homopolymers of VdF (PVdF), VdF/TFE copolymers, VdF/TFE/HFP copolymers, VdF/HFP copolymers, and VdF/CTFE copolymers. In particular, the PVdF, VdF/TFE copolymers, and VdF/HFP copolymers are preferable because they each have an especially high dielectric constant and favorable solvent solubility.

In the case of the VdF/TFE copolymer, the composition ratio is preferably 50 to 95 mol% of the VdF unit and 5 to 50 mol% of the TFE unit, and particularly preferably 60 to 90 mol% of the VdF unit and 10 to 40 mol% of the TFE unit, because such a copolymer has a comparatively high electrical insulation properties among the VdF resins. In another aspect, the ratio of 60 to 95 mol% of the VdF unit and 5 to 40 mol% of the TFE unit, especially the ratio of 70 to 90 mol% of the VdF unit and 10 to 30 mol% of the TFE unit is also acceptable. Moreover, with an aim of lowering the dielectric loss of the VdF resin itself, the VdF resin is preferably copolymerized with ethylene, propylene, alkylvinylether, vinyl acetate, vinyl chloride, vinylidene chloride, CH₂=CHCF₃, or CH₂=CFCF₃. In such a case, since being hard to react directly, VdF may be copolymerized together with above-mentioned other monomers copolymerizable with VdF such as TFE. The dielectric constant (1 kHz, 25°C) of the VdF resin itself is not less than 5, preferably not less than 6, and more preferably not less than 7.5 because such a dielectric constant allows further improvement in the dielectricity of the film. Here, the upper limit of the dielectric constant is not particularly limited. The common upper limit is 15, and the preferable upper limit is 13.

In the present invention, a fluorine-free resin (a2) may be used in combination with the VdF resin (a1), as the film-forming resin (A).

The fluorine-free resin (a2) used in combination is preferably a cellulose resin and/or an acrylic resin, as they are favorably compatible with the VdF resin.

In the case of using the fluorine-free resin (a2) in combination, it is possible to achieve an effect of reducing the temperature dependency of the dielectric loss of the VdF resin (a1) especially at high temperatures.

Examples of the cellulose resin include: ester-substituted cellulose such as cellulose monoacetate, cellulose diacetate, cellulose triacetate, cellulose acetate propoianate, and cellulose acetate butyrate; and ether-substituted cellulose such as methylcellulose, ethylcellulose, and hydroxypropylmethylcellulose. In particular, cellulose acetate propionate and cellulose acetate butyrate are preferable as they have favorable compatibility with the VdF resin.

Examples of the acrylic resin include methyl polymethacrylate and styrene-methyl methacrylate copolymers. In particular, methyl polymethacrylate is preferable as it is favorably compatible with the VdF resin.

In the case of using the fluorine-free resin (a2) in combination, the mass ratio of the VdF resin (a1) and the fluorine-free resin (a2) is preferably 80/20 to 99.9/0.1, and more preferably 90/10 to 95/5, as such a ratio realizes a high dielectric constant and smaller temperature dependency of the dielectric loss at frequencies of the Hz order.

### (B) Inorganic oxide particles

The inorganic oxide particles (B) used in the present invention is at least one of the following inorganic oxide particles.

### (B1) Inorganic oxide particles of a metallic element of Group 2, 3, 4, 12, or 13 of the Periodic Table, or inorganic oxide composite particles of these

Examples of the metallic elements include Be, Mg, Ca, Sr, Ba, Y, Ti, Zr, Zn, and Al. In particular, oxides of Al, Mg, Y, and Zn are preferable as they are multipurpose and cost-effective, and have high volume resistivity.

Specifically, at least one selected from the group consisting of Al₂O₃, MgO, ZrO₂, Y₂O₃, BeO, and MgO·Al₂O₃ particles are preferable, as they have high volume resistivity.

In particular, Al₂O₃ having a γ-type crystal structure is preferable because of its high specific area and favorable dispersibility in a resin.

(B2) Inorganic oxide particles represented by formula (1): M¹ₐ₁N_{b1}O_{c1} wherein M¹ represents a metallic element of Group 2, N represents a metallic element of Group 4, a1 represents 0.9 to 1.1, b1 represents 0.9 to 1.1, c1 represents 2.8 to 3.2, and the numbers of M¹ and N each may be more than 1
The metallic element of Group 4 is preferably Ti and Zr, and the metallic element of Group 2 is preferably Mg, Ca, Sr, and Ba.

Specifically, at least one selected from the group consisting of BaTiO₃, SrTiO₃, CaTiO₃, MgTiO₃, BaZrO₃, SrZrO₃, CaZrO₃, and MgZrO₃ particles are preferable, as they have high volume resistivity.

### (B3) Inorganic oxide composite particles of an oxide of a metallic element of Group 2, 3, 4, 12, or 13 of the Periodic Table and silicon oxide

This type of the inorganic oxide particles are composite particles of the inorganic oxide particles (B1) and silicon oxide. Specifically, such inorganic oxide particles are at least one selected from the group consisting of 3Al₂O₃·2SiO₂, 2MgO·SiO₂, ZrO₂·SiO₂, and MgO·SiO₂.

In the present invention, the inorganic oxide particles (B) preferably have a small average particle size. In particular, the inorganic oxide particles (B) are preferably nanoparticles having an average particle size of not more than 1 µm. Uniform dispersion of such inorganic oxide nanoparticles allows significant improvement in electrical insulation properties of the film by addition of only a small amount of the nanoparticles. The primary average particle size is preferably not more than 300 nm, more preferably not more than 200 nm, and particularly preferably not more than 100 nm. The lower limit of the primary average particle size is not particularly limited. Preferably, the primary average particle size is not less than 10 nm from the standpoint of difficulty in production, difficulty in uniform dispersion, and cost.

Such inorganic oxide particles (B) are not aimed to improve the dielectricity but aimed to improve the electrical insulation properties, and eventually to improve the volume resistivity. Therefore, the inorganic oxide particles (B) are not necessarily highly dielectric. Accordingly, even use of multipurpose and cheap oxide particles (B1) of a metal, especially Al₂O₃ or MgO, improves the volume resistivity. The dielectric constant (1 kHz, 25°C) of the oxide particles (B1) of such a metal is less than 100, and moreover not more than 10.

In the present invention, ferroelectric (dielectric constant (1kHz, 25°C): 100 or more) metal oxide particles (B2) to (B3) which have been conventionally added in order to improve the dielectricity may be used as the inorganic oxide particles (B). However, the added amount is so small that enhancement of the dielectricity is not so much expected, which is different from the conventional usage patterns. In a more preferable embodiment, particles having a primary average particle size of not more than 1 µm are used, which is also different from the conventional usage patterns in terms of the particle size as addition of a large amount of such particles is less likely to allow uniform dispersion.

Examples of the inorganic material of the ferroelectric metal oxide particles (B2) and (B3) include the following composite metal oxides, and their composites, solid solutions, and sol gel materials. However, the inorganic material is not limited only to these.

The amount of the inorganic oxide particles (B) is not less than 0.01 parts by mass and less than 10 parts by mass for each 100 parts by mass of the film-forming resin (A). The amount of not less than 10 parts by mass tends to contrarily lower the electrical insulation properties (withstand voltage). In addition, uniform dispersion of the inorganic oxide particles (B) in the film-forming resin (A) may become not easy. The upper limit of the amount is preferably 8 parts by mass, and more preferably 6 parts by mass. If the amount is too small, the electrical insulation properties cannot be improved. Therefore, the lower limit of the amount is preferably 0.1 parts by mass, more preferably 0.5 parts by mass, and particularly preferably 1 part by mass.

### (C) Other optional components

In the present invention, the electrical insulation properties of the high dielectric film are sufficiently improved by the specific film-forming resin (A) and the inorganic oxide particles (B) mentioned above. Other additives such as reinforcing fillers or affinity improvers may be contained to the extent that would not adversely influence the effect of the present invention.

A reinforcing filler is added to provide mechanical properties (e.g. tensile strength, hardness) and is particles other than the above inorganic oxide particles (B) or fibers. Examples thereof include particles or fibers of silicon carbide, silicon nitride, and a boron compound. Here, silica (silicon oxide) may be added as a processing aid or reinforcing filler, but less improves the electrical insulation properties compared to the inorganic oxide particles (B) as it has low thermal conductivity and significantly lowers the volume resistivity especially at high temperatures.

An affinity improver is a compound other than the film-forming resin (A) and examples thereof include functional group-modified polyolefine, stylene-modified polyolefine, functional group-modified polystyrene, polyimide acrylate, and cumylphenol. Such an affinity improver may be contained to the extent that would not adversely influence the effect of the present invention. Here, from the standpoint of the improvement in electrical insulation properties, it is more preferable that these components are not contained.

The high dielectric film of the present invention may be produced by forming a film by applying a coating composition containing the film-forming resin (A), the inorganic oxide particles (B), and other components (C) and a solvent (D) according to need, and then peeling the formed film.

The solvent (D) for preparing the coating composition may be any solvent that can dissolve the VdF resin (a1) and, if necessary, the fluorine-free resin (a2). In particular, a polar organic solvent is preferable. Examples of the polar organic solvent include ketone solvents, ester solvents, carbonate solvents, cyclic ether solvents, and amide solvents. Specific examples thereof preferably include methylethyl ketone, methyl isobutyl ketone, acetone, diethyl ketone, dipropyl ketone, ethyl acetate, methyl acetate, propyl acetate, butyl acetate, ethyl lactate, dimethyl carbonate, diethyl carbonate, dipropyl carbonate, methylethyl carbonate, tetrahydrofuran, methyltetrahydrofuran, dioxane, dimethylformamide, and dimethylacetoamide.

In the coating composition, the total solid content concentration of the solid contents of the film-forming resin (A), the inorganic oxide particles (B), and other optional components is preferably adjusted with the solvent (D) to 5% to 30% by mass, because such a composition is easily applied for coating and has favorable stability. The coating composition may be prepared by dissolving or dispersing these components in a solvent.

According to the present invention, it is important to uniformly disperse the inorganic oxide particles (B) in the film-forming resin (A). In the present invention, the amount of the inorganic oxide particles (B) is small, and therefore, uniform dispersion is relatively easy. According to need, a surfactant may be added to the coating composition, in addition to the affinity improver.

The surfactant may be cationic, anionic, nonionic, or amphoteric. In particular, a non-ionic surfactant, especially a polymer non-ionic surfactant is preferable. Examples of the polymer non-ionic surfactant include polyoxyethylene lauryl ether and sorbitan monostearate.

A method for applying a coating composition may be knife coating, cast coating, roll coating, gravure coating, blade coating, rod coating, air doctor coating, curtain coating, Faknelane coating, kiss coating, screen coating, spin coating, spray coating, extrusion coating, and electrodeposition coating. In particular, roll coating, gravure coating, and cast coating are preferable in terms of easy operation, less uneven film thickness, and excellent productivity. Especially, cast coating is preferable and with this method, an excellent film for a film capacitor can be produced.

In the case where the coating composition is cast on the surface of a base and the dried composition is peeled from the base, an obtainable high dielectric film is excellent in the electrical insulation properties and the withstand voltage. Moreover, such a film is excellent as it is a thin film having flexibility.

The base used for cast coating preferably has a non-porous surface, and is not particularly limited as long as it allows formation of a dense film surface. Examples thereof include: resin films such as a polyester film, a polycarbonate film, and a polyimide film; and metallic foil such as aluminum foil and copper foil. Moreover, the base is preferably subjected to mold release treatment in advance.

The high dielectric film of the present invention thus obtained has a thickness of not more than 20 µm, preferably not more than 10 µm, more preferably not more than 6 µm, and particularly preferably not more than 5 µm. The lower limit of the thickness is preferably about 2 µm from the standpoint of maintenance of the mechanical strength.

The present invention also relates to a film capacitor in which an electrode layer is stacked on at least one side of the high dielectric film of the present invention.

The film capacitor may be, for example, a stacked-type capacitor in which electrode layers and high dielectric films are alternately layered (JP S-63-181411 A, JP H-03-18113 A) or a wound capacitor in which a tape-shaped high dielectric film and a tape-shaped electrode layer are wound (a capacitor in which electrodes are not continuously layered on the high dielectric film as disclosed in JP S-60-262414, and a capacitor in which electrodes are continuously layered on the high dielectric film as disclosed in JP H-03-286514). A wound film capacitor has a simple structure and is comparatively easily produced, in which electrode layers are continuously layered on the high dielectric film. In the case of such a wound film capacitor, commonly, two sheets of high dielectric films in which electrodes are layered on one side are stacked so as not to allow the electrodes to contact each other and the stacked films are wound. Then, the wound films are fixed so as not to become loose according to need. In this manner, a wound film capacitor is produced.

The electrode layer is not particularly limited, and is commonly a layer formed of a conductive metal such as aluminum, zinc, gold, platinum, and copper. The electrode layer is used in the form of metal foil or an evaporated metal film. In the present invention, metal foil or an evaporated metal film may be used. Or alternatively, both may be used in combination. Commonly, an evaporated metal film is preferable because of the following reasons. Firstly, it realizes a thinner electrode layer to make the capacity large relative to the volume. Secondly, it is excellent in adhesion to a dielectric material. And thirdly, it has less variety in thickness. The evaporated metal film is not limited to a single layer, but may be formed into a multilayer, according to need, by a method in which an aluminum oxide layer of a semiconductor is further formed on an aluminum layer to produce an electrode layer with moisture resistance (for example, JP H-02-250306 A). The thickness of the evaporated metal film is also not particularly limited, and is preferably 100 to 2,000 angstroms, and more preferably 200 to 1,000 angstroms. When the evaporated metal film has a thickness within this range, the capacity and the strength of the capacitor are favorably well-balanced.

In the case of using an evaporated metal film as an electrode layer, a method for forming a film is not particularly limited, and may be vacuum evaporation, sputtering, ion plating, or the like. Commonly, vacuum evaporation is employed.

Batch type vacuum evaporation is employed for molded products, and semi-continuous or continuous (air to air) type vacuum evaporation is employed for long products. At the present, the semi-continuous type vacuum evaporation is mainly used. The semi-continuous type vacuum evaporation includes carrying out metal deposition and winding the film in the vacuum system, changing the system from the vacuum system to the atmosphere system, and removing the deposited film.

The semi-continuous type vacuum evaporation may be carried out, for example, in accordance with the method mentioned with reference to Fig. 1 in Japanese Patent No. 3664342.

In the case of forming a thin metal film layer on the high dielectric film, treatment for enhancing the adhesion, such as corona treatment and plasma treatment, may be carried out to the high dielectric film in advance. In the case of using metal foil as an electrode layer, the thickness of the metal foil is not particularly limited. The thickness is commonly 0.1 to 100 µm, preferably 1 to 50 µm, and more preferably 3 to 15 µm.

A method for fixing the high dielectric films is not particularly limited. For example, the films may be sealed with a resin or enclosed in an insulating casing so that fixing and protection of the structure are performed at the same time. A method for connecting a lead wire is also not particularly limited, and exemplary methods include welding, ultrasonic welding, thermocompression bonding, and fixing with adhesive tapes. A lead wire may be connected to an electrode prior to winding of the films. In the case where the high dielectric films are enclosed in an insulating casing, an opening may be sealed with a thermosetting resin such as urethane resin and epoxy resin, if needed, so that oxidation degradation is avoided.

The film capacitor of the present invention thus obtained has a significantly increased volume resistivity while maintaining high dielectricity.

### EXAMPLES

The present invention is specifically described with reference to drawings, but the present invention is not limited to these examples.

Here, the characteristic values used herein are measured by the following method.

### (Film thickness)

The thickness of a film on a base is measured with a digital thickness meter (MF-1001 produced by Sendai Nikon Corporation) at room temperature.

### (Dielectric strength)

The withstand voltage of a film on a base is measured with a withstand voltage and insulation resistance tester (TOS9201 produced by Kikusui Electronics Corp.) in a dry air atmosphere. The speed of the rise in pressure is 100 V/s.

### (Dielectric loss and dielectric constant)

A sample is prepared by depositing aluminum on both faces of a composite film in vacuo. The static capacitance and dielectric loss factor of the sample were measured with an impedance analyser (HP 4194A produced by Hewlett-Packard Company) under the conditions of the temperatures of 30°C and 85°C and frequencies of 100 Hz, 1 kHz, and 10 kHz. Based on the obtained values of the static capacitance and dielectric loss factor, the dielectric constant and dielectric loss (%) were calculated.

### (Volume resistivity)

The volume resistivity (Ω · cm) was measured with a digital super megohmmeter/microammeter at 85°C in a dry air atmosphere and at 500-V DC.

### Example 1

A 1-L separable flask was charged with 640 parts by mass of dimethyl acetamide (DMAc) (produced by Kishida Chemical Co., Ltd.) and 160 parts by mass of polyvinylidene fluoride (PVdF) (VP 825 produced by Daikin Industries, ltd., dielectric constant (1 kHz, 25°C): 9.5). The mixture was stirred with a three-one motor at 60°C for 24 hours to provide a PVdF solution having a concentration of 20% by mass.

To 30 parts by mass of the DMAc solution of PVdF (concentration: 20% by mass), 0.06 parts by mass of AL₂O₃ particles (crystal form: γ type, primary average particle size: 100 nm, dielectric constant (1 kHz, 25°C) : 2.1.AKP-G15 produced by Sumitomo Chemical Co., Ltd.) and 10 parts by mass of methylethylketone (MEK) were added. To this mixture, an equal mass of zirconia beads (1 mm in diameter) was added. The mixture was then put into a desk-top planet ball mill (Planet M produced by Gokin Planetaring Inc.) and subjected to dispersion treatment at 800 rpm at room temperature for 15 minutes. The dispersed mixture was passed through a stainless-steel mesh (80 mesh produced by Manabe Kogyo Co., Ltd.), and zirconia beads were thereby removed. In this manner, a coating composition was prepared.

The coating composition was cast on a non-porous polyester (PET) film (38 µm thick) preliminary subjected to a mold release treatment with a micro gravure coater. The resulting film was passed through a drying furnace to provide a laminate film in which a VdF resin film is formed on a PET film. Then, the VdF resin film was peeled from the PET film to provide a high dielectric film (6.1 µm thick) of the present invention.

The withstand voltage, dielectric loss, dielectric constant, and volume resistivity of the obtained film were determined. Table 1 shows the results.

### Examples 2 to 5

A coating compositions were each prepared in the same manner as in Example 1, except that the amount of Al₂O₃ particles was changed in accordance with the amount shown in Table 1. Each composition was cast in the same manner as in Example 1 to provide a high dielectric film of the present invention.

The withstand voltage, dielectric loss, dielectric constant, and volume resistivity of the obtained films were determined. Table 1 shows the results.

### Comparative Example 1

A coating composition was prepared in the same manner as in Example 1, except that Al₂O₃ particles were not blended. The composition was cast in the same manner as in Example 1 to provide a high dielectric film (6.2 µm thick) for comparison.

The withstand voltage, dielectric loss, dielectric constant, and volume resistivity of the obtained film were determined. Table 1 shows the results.

### Comparative Example 2

A coating composition was prepared in the same manner as in Example 1, except that the amount of Al₂O₃ particles was changed to 0.72 parts by mass (12 parts by mass of Al₂O₃ particles for each 100 parts by mass of PVdF). The composition was cast in the same manner as in Example 1 to provide a high dielectric film (6.2 µm thick) for comparison.

The withstand voltage, dielectric loss, dielectric constant, and volume resistivity of the obtained film were determined. Table 1 shows the results.

**[Table 1]**

| | Example | | | | | | | | | | Comparative Example | | | |
|---|---|---|---|---|---|---|---|---|---|---|---|---|---|---|
| | 1 | | 2 | | 3 | | 4 | | 5 | | 1 | | 2 | |
| (A) Film-forming resin (parts by mass) | | | | | | | | | | | | | | |
| PVdF | 6 | | 6 | | 6 | | 6 | | 6 | | 6 | | 6 | |

| (B) Inorganic oxide particles (parts by mass) | | | | | | | | | | | | | | |
|---|---|---|---|---|---|---|---|---|---|---|---|---|---|---|
| γ-Al₂O₃ | 0.06 | | 0.30 | | 0.54 | | 0.006 | | 0.003 | | - | | 0.72 | |
| Particle size (nm) | 100 | | 100 | | 100 | | 100 | | 100 | | - | | 100 | |
| (B)/(A) (mass ratio) | 1/100 | | 5/100 | | 9/100 | | 0.1/100 | | 0.05/100 | | - | | 12/100 | |

| Film properties | | | | | | | | | | | | | | |
|---|---|---|---|---|---|---|---|---|---|---|---|---|---|---|
| Film thickness (*µ* m) | 6.1 | | 6.0 | | 6.1 | | 6.5 | | 6.3 | | 6.2 | | 6.2 | |
| Volume resistivity (Ω·cm) | 1.6 × 10¹⁴ | | 4.2 × 10¹⁴ | | 4.1 × 10¹⁴ | | 9.5 × 10¹³ | | 5.2 × 10¹³ | | 2.5 × 10¹³ | | 3.7 × 10¹⁴ | |
| Withstand voltage (V *µ* m) | 570 | | 560 | | 560 | | 570 | | 580 | | 610 | | 500 | |
| Measured temperature (°C) | 30°C | 85°C | 30°C | 85°C | 30°C | 85°C | 30°C | 85°C | 30°C | 85°C | 30°C | 85°C | 30°C | 85°C |

| Dielectric constant | | | | | | | | | | | | | | |
|---|---|---|---|---|---|---|---|---|---|---|---|---|---|---|
| 100 Hz | 11 | 13 | 11 | 13 | 11 | 12 | 11 | 13 | 11 | 13 | 11 | 14 | 11 | 12 |
| 1 kHz | 10 | 12 | 10 | 12 | 10 | 12 | 10 | 12 | 10 | 12 | 10 | 13 | 10 | 11 |
| 10 kHz | 10 | 11 | 10 | 11 | 10 | 11 | 10 | 11 | 10 | 12 | 10 | 13 | 10 | 11 |

| Dielectric loss (%) | | | | | | | | | | | | | | |
|---|---|---|---|---|---|---|---|---|---|---|---|---|---|---|
| 100 Hz | 5.2 | 6.4 | 5.2 | 6.4 | 5.1 | 6.3 | 5.6 | 6.5 | 5.8 | 6.6 | 6.2 | 6.5 | 5.0 | 6.2 |
| 1 kHz | 3.5 | 9.4 | 3.4 | 9.2 | 3.4 | 9.2 | 3.3 | 9.5 | 3.3 | 9.4 | 3.3 | 9.6 | 3.3 | 9.0 |
| 10 kHz | 2.7 | 7.6 | 2.6 | 7.5 | 2.6 | 7.4 | 3.0 | 8.1 | 3.1 | 8.3 | 3.1 | 8.5 | 2.4 | 7.1 |

Table 1 shows that addition of Al₂O₃ particles improves the volume resistivity. However, the excessive amount of Al₂O₃ particles significantly lowers other physical properties (withstand voltage). Accordingly, it is clarified that the appropriate amount to be added is not more than 10 parts by mass relative to the resin.

### Examples 6 to 9

A coating compositions were each prepared in the same manner as in Example 1, except that inorganic oxide particles shown in Table 2 were used in amounts shown in Table 2 as the inorganic oxide particles (B). Each composition was cast in the same manner as in Example 1 to provide a high dielectric film.

The withstand voltage, dielectric loss, dielectric constant, and volume resistivity of the obtained films were determined. Table 2 shows the results.

### Comparative Example 3

A coating composition was prepared in the same manner as in Example 1, except that silica particles (primary average particle size: 15 nm, dielectric constant (1 kHz, 25°C): 3.5, produced by Sigma-Aldrich Japan K.K.) were used instead of the inorganic oxide particles (B). The composition was cast in the same manner as in Example 1 to provide a high dielectric film.

The withstand voltage, dielectric loss, dielectric constant, and volume resistivity of the obtained film were determined. Table 2 shows the results.

The inorganic oxide particles shown in Table 2 are listed below.
Al₂O₃ particles (B1) (crystal form: θ type, primary average particle size: 10 nm, dielectric constant (1kHz, 25°C) : 2.1, TM-100 produced by Taimei Chemicals Co., Ltd.)
MgO particles (B1) (primary average particle size: 30 nm, dielectric constant (1 kHz, 25°C) : 9.8, 3310FY produced by ATR Company)
Spinel (MgO·Al₂O₃) particles (B1) (primary average particle size: 240 nm, dielectric constant (1 kHz, 25°C): 20, TSP-20 produced by Taimei Chemicals Co., Ltd.)
BaTiO₃ particles (B2) (primary average particle size: 50 nm, dielectric constant (1 kHz, 25°C): 1500, T-BTO-50RF produced by Toda Kogyo Corp.)

**[Table 2]**

| | Example | | | | | | | | Comparative Example | |
|---|---|---|---|---|---|---|---|---|---|---|
| | 6 | | 7 | | 8 | | 9 | | 3 | |
| (A) Film-forming resin (parts by mass) | | | | | | | | | | |
| PVdF | 6 | | 6 | | 6 | | 6 | | 6 | |

| (B) Inorganic oxide particles (parts by mass) | | | | | | | | | | |
|---|---|---|---|---|---|---|---|---|---|---|
| θ -Al₂O₃ | 0.30 | | - | | - | | - | | - | |
| MgO | - | | 0.30 | | - | | - | | - | |
| MgO·Al₂O₃ | - | | - | | 0.30 | | - | | - | |
| BaTiO₃ | - | | - | | - | | 0.30 | | - | |
| Silica | - | | - | | - | | - | | 0.30 | |
| Particle size (nm) | 14 | | 30 | | 50 | | 240 | | 15 | |
| (B)/(A) (mass ratio) | 1/100 | | 1/100 | | 1/100 | | 1/100 | | 1/100 | |

| Film properties | | | | | | | | | | |
|---|---|---|---|---|---|---|---|---|---|---|
| Film thickness (µ m) | 6.3 | | 5.9 | | 6.0 | | 5.8 | | 6.2 | |
| Volume resistivity (Ω·cm) | 2.2 × 10¹⁴ | | 1.2 × 10¹⁴ | | 4.8 × 10¹³ | | 4.8 × 10¹³ | | 2.5 × 10¹³ | |
| Withstand voltage (V/ µ m) | 580 | | 550 | | 570 | | 580 | | 560 | |
| Measured temperature (°C) | 30°C | 85°C | 30°C | 85°C | 30°C | 85°C | 30°C | 85°C | 30°C | 85°C |

| Dielectric constant | | | | | | | | | | |
|---|---|---|---|---|---|---|---|---|---|---|
| 100 Hz | 11 | 13 | 11 | 13 | 12 | 14 | 11 | 13 | 11 | 13 |
| 1 kHz | 10 | 12 | 10 | 12 | 11 | 13 | 10 | 12 | 10 | 12 |
| 10 kHz | 10 | 11 | 10 | 12 | 11 | 13 | 10 | 11 | 10 | 12 |

| Dielectric loss (%) | | | | | | | | | | |
|---|---|---|---|---|---|---|---|---|---|---|
| 100 Hz | 5.2 | 6.5 | 5.3 | 6.7 | 6.2 | 8.5 | 5.3 | 6.8 | 5.1 | 6.6 |
| 1 kHz | 3.6 | 9.2 | 3.5 | 9.5 | 3.7 | 9.2 | 3.7 | 9.4 | 3.8 | 9.3 |
| 10 kHz | 2.6 | 7.5 | 2.6 | 8.4 | 3.0 | 7.5 | 2.7 | 7.3 | 2.7 | 7.2 |

Table 2 shows that the volume resistivity is increased even when the kind of the inorganic oxide is changed.

### Example 10

A coating composition was prepared in the same manner as in Example 2, except that VdF/TFE (80/20 mol%) copolymers were used as a film-forming resin. The composition was cast in the same manner as in Example 1 to provide a high dielectric film.

The withstand voltage, dielectric loss, dielectric constant, and volume resistivity of the obtained film were determined. Table 3 shows the results.

### Example 11

A coating composition was prepared in the same manner as in Example 2, except that PVdF and cellulose acetate butyrate (CAB, CAB321 produced by Eastman Chemical Japan Ltd.) at a molar ratio of 90/10 were used as a film-forming resin. The composition was cast in the same manner as in Example 1 to provide a high dielectric film.

The withstand voltage, dielectric loss, dielectric constant, and volume resistivity of the obtained film were determined. Table 3 shows the results.

### Example 12

A coating composition was prepared in the same manner as in Example 2, except that VdF/TFE (80/20 mol%) copolymers and cellulose acetate butyrate (CAB, CAB321 produced by Eastman Chemical Japan Ltd.) at a molar ratio of 90/10 were used as a film-forming resin. The composition was cast in the same manner as in Example 1 to provide a high dielectric film.

The withstand voltage, dielectric loss, dielectric constant, and volume resistivity of the obtained film were determined. Table 3 shows the results.

### Example 13

A coating composition was prepared in the same manner as in Example 2, except that VdF/TFE (67/33 mol%) copolymers were used as a film-forming resin. The composition was cast in the same manner as in Example 1 to provide a high dielectric film.

The withstand voltage, dielectric loss, dielectric constant, and volume resistivity of the obtained film were determined. Table 3 shows the results.

### Example 14

A coating composition was prepared in the same manner as in Example 2, except that VdF/TFE (67/33 mol%) copolymers and cellulose acetate butyrate (CAB, CAB321 produced by Eastman Chemical Japan Ltd.) at a molar ratio of 90/10 were used as a film-forming resin. The composition was cast in the same manner as in Example 1 to provide a high dielectric film.

The withstand voltage, dielectric loss, dielectric constant, and volume resistivity of the obtained film were determined. Table 3 shows the results.

### Example 15

A coating composition was prepared in the same manner as in Example 2, except that VdF/TFE (67/33 mol%) copolymers and cellulose acetate butyrate (CAB, CAB321 produced by Eastman Chemical Japan Ltd.) at a molar ratio of 80/20 were used as a film-forming resin. The composition was cast in the same manner as in Example 1 to provide a high dielectric film.

The withstand voltage, dielectric loss, dielectric constant, and volume resistivity of the obtained film were determined. Table 3 shows the results.

### Example 16

A coating composition was prepared in the same manner as in Example 14, except that the amount of Al₂O₃ particles was changed in accordance with Table 3. The composition was cast in the same manner as in Example 1 to provide a high dielectric film.

The withstand voltage, dielectric loss, dielectric constant, and volume resistivity of the obtained film were determined. Table 3 shows the results.

**[Table 3]**

| | Example | | | | | | | | | | | | | |
|---|---|---|---|---|---|---|---|---|---|---|---|---|---|---|
| | 10 | | 11 | | 12 | | 13 | | 14 | | 15 | | 16 | |
| (A) Film-forming resin (parts by mass) | | | | | | | | | | | | | | |
| VdF/TFE (80/20) | 6 | | - | | - | | - | | - | | - | | - | |
| VdF/TFE (67/33) | - | | - | | - | | 6 | | - | | - | | - | |
| PVdF + CAB | - | | 5.4+0.6 | | - | | - | | - | | - | | - | |
| VdF/TFE (80/20) + CAB | - | | - | | 5.4+0.6 | | - | | - | | - | | - | |
| VdF/TFE (67/33) + CAB | - | | - | | - | | - | | 5.4+0.6 | | 4.8+1.2 | | 5.4+0.6 | |

| (B) Inorganic oxide particles (parts by mass) | | | | | | | | | | | | | | |
|---|---|---|---|---|---|---|---|---|---|---|---|---|---|---|
| γ-Al₂O₃ | 0.30 | | 0.30 | | 0.30 | | 0.30 | | 0.30 | | 0.30 | | 0.12 | |
| Particle size (nm) | 100 | | 100 | | 100 | | 100 | | 100 | | 100 | | 100 | |
| (B)/(A) (mass ratio) | 5/100 | | 5/100 | | 5/100 | | 5/100 | | 5/100 | | 5/100 | | 2/100 | |

| Film properties | | | | | | | | | | | | | | |
|---|---|---|---|---|---|---|---|---|---|---|---|---|---|---|
| Film thickness (µ m) | 6.0 | | 6.2 | | 6.2 | | 6.1 | | 5.9 | | 5.6 | | 6.1 | |
| Volume resistivity (Ω·cm) | 4.0 × 10¹⁴ | | 4.4 × 10¹⁴ | | 4.8 × 10¹⁴ | | 9.5 × 10¹⁴ | | 1.5 × 10¹⁵ | | 1.0 × 10¹⁵ | | 1.5 x1015 | |
| Withstand voltage (V/ µ m) | 520 | | 570 | | 540 | | 510 | | 545 | | 550 | | 550 | |
| Measured temperature (°C) | 30°C | 85°C | 30°C | 85°C | 30°C | 85°C | 30°C | 85°C | 30°C | 85°C | 30°C | 85°C | 30°C | 85°C |

| Dielectric constant | | | | | | | | | | | | | | |
|---|---|---|---|---|---|---|---|---|---|---|---|---|---|---|
| 100 Hz | 11 | 12 | 9 | 11 | 10 | 11 | 11 | 12 | 9 | 11 | 8 | 9 | 9 | 11 |
| 1 kHz | 10 | 11 | 8 | 10 | 10 | 10 | 10 | 11 | 8 | 10 | 7 | 8 | 8 | 10 |
| 10 kHz | 10 | 10 | 8 | 9 | 9 | 10 | 10 | 11 | 8 | 10 | 7 | 8 | 8 | 10 |

| (Dielectric loss (%) | | | | | | | | | | | | | | |
|---|---|---|---|---|---|---|---|---|---|---|---|---|---|---|
| 100 Hz | 2.2 | 4.3 | 5.1 | 5.9 | 1.8 | 3.7 | 2.4 | 2.4 | 1.7 | 2.1 | 1.7 | 2.0 | 1.8 | 2.1 |
| 1 kHz | 1.8 | 3.4 | 3.1 | 8.5 | 1.7 | 3.2 | 2.3 | 2.4 | 1.9 | 2.2 | 1.8 | 2.1 | 1.9 | 2.3 |
| 10 kHz | 2.3 | 3.2 | 2.5 | 6.7 | 2.1 | 3.1 | 2.7 | 3.4 | 2.3 | 2.5 | 2.2 | 2.6 | 2.4 | 2.7 |

Table 3 shows that the volume resistivity is increased by addition of γ-Al₂O₃ particles even when the kind of the film-forming resin is changed.

### Example 17

A coating composition was prepared in the same manner as in Example 10, except that γ-Al₂O₃ particles were changed to SrTiO₃ (ST-03 produced by Sakai Chemical Industry Co., Ltd.). The composition was cast in the same manner as in Example 10 to provide a high dielectric film (5.7 µm thick) of the present invention.

The withstand voltage, dielectric loss, dielectric constant, and volume resistivity of the obtained film were determined. Table 4 shows the results.

### Example 18

A coating composition was prepared in the same manner as in Example 10, except that γ-Al₂O₃ particles were changed to CaTiO₃ (CT produced by KCM Corporation Co., Ltd.). The composition was cast in the same manner as in Example 10 to provide a high dielectric film (5.9 µm thick) of the present invention.

The withstand voltage, dielectric loss, dielectric constant, and volume resistivity of the obtained film were determined. Table 4 shows the results.

### Example 19

A coating composition was prepared in the same manner as in Example 10, except that γ-Al₂O₃ particles were changed to 3Al₂O₃·2SiO₂ (produced by KYOCERA Corporation). The composition was cast in the same manner as in Example 10 to provide a high dielectric film (6.0 µm thick) of the present invention.

The withstand voltage, dielectric loss, dielectric constant, and volume resistivity of the obtained film were determined. Table 4 shows the results.

**[Table 4]**

| | Example | | | | | |
|---|---|---|---|---|---|---|
| | 17 | | 18 | | 19 | |
| (A) Film-forming resin (parts by mass) | | | | | | |
| VdF/TFE (80/20) | 6 | | 6 | | 6 | |

| (B) Inorganic oxide particles (parts by mass) | | | | | | |
|---|---|---|---|---|---|---|
| SrTiO₃ | 0.06 | | - | | - | |
| CaTiO₃ | - | | 0.06 | | - | |
| 3Al₂O₃·2SiO₂ | - | | - | | 0.06 | |
| Particle size (nm) | 300 | | 300 | | 500 | |
| (B)/(A) (mass ratio) | 1/100 | | 1/100 | | 1/100 | |

| Film properties | | | | | | |
|---|---|---|---|---|---|---|
| Film thickness (*µ* m) | 5.7 | | 5.9 | | 6.0 | |
| Volume resistivity (Ω·cm) | 2.5 × 10¹⁴ | | 9.8 × 10¹³ | | 9.3 × 10¹³ | |
| Withstand voltage (V/ *µ* m) | 510 | | 500 | | 500 | |
| Measured temperature (°C) | 30°C | 85°C | 30°C | 85°C | 30°C | 85°C |

| Dielectric constant | | | | | | |
|---|---|---|---|---|---|---|
| 100 Hz | 11 | 12 | 10 | 11 | 10 | 11 |
| 1 kHz | 10 | 11 | 9 | 10 | 9 | 10 |
| 10kHz | 10 | 10 | 9 | 10 | 9 | 9 |

| Dielectric loss (%) | | | | | | |
|---|---|---|---|---|---|---|
| 100 Hz | 2.5 | 4.7 | 2.7 | 4.8 | 2.8 | 4.7 |
| 1 kHz | 1.9 | 3.6 | 2.0 | 3.6 | 2 | 3.7 |
| 10 kHz | 2.4 | 3.4 | 2.5 | 3.5 | 2.4 | 3.4 |

Table 4 shows that the volume resistivity is increased also in the case where the VdF/TFE (80/20) copolymers are used as the film-forming resin and the inorganic oxide particles (B) are changed to the particles (B2 or (B3), as in the case where the γ-Al₂O₃ particles were used.

### Example 20

Aluminum was deposited on both faces of the high dielectric film prepared in Example 1 aiming at 3Ω/□ to form electrodes in a vacuum deposition equipment (VE-2030 produced by Vacuum Device Inc.). Lead wires were attached to these aluminum electrodes so that a stamp-type (for simple evaluation) film capacitor was produced.

## Claims

1. A high dielectric film comprising:
a film-forming resin (A); and
inorganic particles (B),
wherein the film-forming resin (A) contains a vinylidene fluoride resin (a1),
an amount of the inorganic particles (B) is not less than 0.01 parts by mass and less than 10 parts by mass for each 100 parts by mass of the film-forming resin (A), and
the inorganic oxide particles (B) is at least one selected from the group consisting of:
(B1) inorganic oxide particles of a metallic element of Group 2, 3, 4, 12, or 13 of the Periodic Table, or inorganic oxide composite particles of these;
(B2) inorganic composite oxide particles represented by formula (1):
M¹ₐ₁N_{b1}O_{c1}
wherein M¹ represents a metallic element of Group 2, N represents a metallic element of Group 4, a1 represents 0.9 to 1.1, b1 represents 0.9 to 1.1, c1 represents 2.8 to 3.2, and the numbers of M¹ and N each may be more than 1; and
(B3) inorganic oxide composite particles of an oxide of a metallic element of Group 2, 3, 4, 12, or 13 of the Periodic Table and silicon oxide.

2. The high dielectric film according to claim 1, wherein the inorganic oxide particles or inorganic oxide composite particles (B1) are at least one selected from the group consisting of Al₂O₃, MgO, ZrO₂, Y₂O₃, BeO, and MgO·Al₂O₃.

3. The high dielectric film according to claim 1, wherein the inorganic oxide particles or inorganic oxide composite particles (B1) are γ-type Al₂O₃.

4. The high dielectric film according to claim 1, wherein the inorganic composite oxide particles (B2) are at least one selected from the group consisting of BaTiO₃, SrTiO₃, CaTiO₃, MgTiO₃, BaZrO₃, SrZrO₃, CaZrO₃, and MgZrO₃.

5. The high dielectric film according to claim 1, wherein the inorganic oxide composite particles (B3) are at least one selected from the group consisting of 3Al₂O₃ · 2SiO₂, 2MgO·SiO₂, ZrO₂·SiO₂, and MgO·SiO₂.

6. The high dielectric film according to any one of claims 1 to 5,
wherein the inorganic oxide particles (B) have a primary average particle size of not more than 1 µm.

7. The high dielectric film according to any one of claims 1 to 6,
wherein an amount of the inorganic oxide particles (B) is 0.1 to 5 parts by mass for each 100 parts by mass of the film-forming resin (A).

8. The high dielectric film according to any one of claims 1 to 7,
wherein the film-forming resin (A) contains the vinylidene fluoride resin (a1) and a fluorine-free resin (a2).

9. The high dielectric film according to claim 8, wherein the fluorine-free resin (a2) is at least one selected from the group consisting of a cellulose resin and an acrylic resin.

10. The high dielectric film according to any one of claims 1 to 9,
wherein the vinylidene fluoride resin (a1) is a vinylidene fluoride/tetrafluoroethylene copolymer.

11. The high dielectric film according to any one of claims 1 to 10,
wherein the high dielectric film is for a film capacitor.

12. A film capacitor,
wherein an electrode layer is stacked at least on one side of the high dielectric film according to any one of claims 1 to 11.
